## Europäisches Patentamt
## European Patent Office
## Office européen des brevets

(19)

(11) Numéro de publication: **0 230 163**
**B1**

(12) **FASCICULE DE BREVET EUROPEEN**

(45) Date de publication du fascicule du brevet:
**11.10.89**

(51) Int. Cl.⁴: **B65G 5/00**

(21) Numéro de dépôt: **86402569.7**

(22) Date de dépôt: **20.11.86**

(54) Procédé de prévision et de surveillance de l'étanchéité d'une caverne souterraine.

(30) Priorité: **21.11.85 FR 8517230**

(43) Date de publication de la demande:
**29.07.87 Bulletin 87/31**

(45) Mention de la délivrance du brevet:
**11.10.89 Bulletin 89/41**

(84) Etats contractants désignés:
**ES GB GR IT SE**

(56) Documents cités:
**CH-A- 404 548**
**GB-A- 2 067 276**

**PETROLE ET TECHNIQUES,
no. 284, novembre 1981, pages 62-68, Paris, FR; D.
LEGROS: "Le stockage souterrain de gaz naturel et
son environnement - Cas du stockage de l'Izaute"**

(73) Titulaire: **Société française de stockage géologique
"GEOSTOCK" (Société à responsabilité limitée), Tour
Aurore - Cédex No 5, F-92080 Paris La Défense 2(FR)**

(72) Inventeur: **Amantini, Eric, Les Gémeaux 40 rue Baudin,
F-92400 Courbevoie(FR)**

(74) Mandataire: **Pinguet, André, CAPRI 28 bis, avenue
Mozart, F-75016 Paris(FR)**

ACTORUM AG

## Description

La présente invention concerne les techniques de stockage souterrain de produits liquides ou gazeux, notamment des gaz comprimés liquéfiables non solubles dans l'eau, et en particulier des hydrocarbures.

La réalisation d'un tel stockage comprend le creusement d'une ou de plusieurs cavernes, de toutes formes et dimensions appropriées, tenant compte de l'exploitation, envisagée et de la nature du terrain, ou l'aménagement de vides naturels ou artificiels existants tels que mines, carrières, etc. Le stockage se trouve à une certaine profondeur en dessous du niveau de la nappe phréatique dans un massif plus ou moins perméable saturé d'eau.

La pression du produit stocké est généralement supérieure à la pression atmosphérique, et il faut s'assurer de l'étanchéïté de la caverne, c'est-à-dire de l'impossibilité pour le produit de pénétrer dans le terrain par infiltration. Cette étanchéïté est généralement obtenue par un écoulement d'eau continu dans la caverne depuis le massif à travers les parois de la caverne.

A pression sensiblement constante, un régime d'écoulement permanent s'établit, et on a admis dans l'art antérieur qu'il fallait avoir une hauteur, entre le sommet de la caverne et le point bas de la nappe phréatique, au moins égale à la pression du gaz dans la caverne, exprimée en hauteur d'eau, pour que le produit stocké ne s'infiltre pas dans le massif, c'est-à-dire pour qu'il n'y ait pas de fuite, la différence étant considérée comme une marge de sécurité.

Le brevet français n° 2 473 618 (GEOSTOCK) concerne une méthode à mettre en oeuvre pour que cette marge de sécurité soit aussi faible que possible, et introduit une grandeur homogène à une pression appelée paramètre de forme qui permet d'apprécier la marge de sécurité minimale à prendre en compte.

Cependant, ces considérations ne sont applicables qu'en régime permanent. Lorsque la pression varie dans la caverne, par exemple lors de la mise en pression de la caverne jusqu'à une pression dite d'épreuve pour éprouver son étanchéïté, ou lors d'un apport de produit à une température supérieure à la température de stockage, le régime d'écoulement autour de la caverne n'est plus permanent et il apparaît des phénomènes transitoires qui peuvent inverser le sens de l'écoulement d'eau et donc permettre l'infiltration de produit dans le massif sur une certaine frange autour de la caverne. La caverne n'est alors plus étanche au sens précédemment décrite. Ces phénomènes transitoires tendent ensuite à disparaître progressivement et on s'achemine à nouveau vers un régime permanent. La durée des phénomènes transitoires dépend de la nature et de la perméabilité du massif.

Ainsi, si le parmètre de forme évoqué ci-dessus est un critère d'étanchéïté statique, il restait à mettre au point un critère d'étanchéïté dynamique, c'est-à-dire à pression variable. C'est là l'object de la présente invention.

L'un des buts de la présente invention est de proposer un procédé de prévision et de surveillance de l'étanchéïté d'une caverne souterraine réalisée dans un massif imprégné d'eau, notamment lorsque la pression du produit varie.

L'écoulement de l'eau entre le massif et la caverne se fait selon les potentiels de pression hydraulique décroissants, le potentiel de pression hydraulique Ø en un point étant défini par la relation:

$\emptyset = p - \rho g z$

Ø: potentiel au point considéré

p: pression au point considéré

ρ: densité de l'eau

g: accélération due à la pesanteur

z: profondeur du point considéré (l'axe des z étant ici orienté vers le bas)

La vitesse $\vec{v}$ de l'écoulement est alors de la forme

$$v = -k \; \overrightarrow{grad} \; \emptyset$$

où k est un facteur proportionnel à la perméabilité du massif.

Selon la présente invention, un procédé de prévision et de surveillance de l'étanchéïté d'une caverne souterraine réalisée dans un massif imprégné d'eau comprend:

— la détermination ou le calcul du gradient du potentiel Ø en tout point du massif sur une certaine frange autour de la caverne à l'aide d'un modèle avantageusement par éléments finis ou son observation ou sa mesure sur une maquette à échelle réduite de la caverne;

— la mise en pression progressive dans la caverne; la détermination d'une vitesse de montée en pression possible dans cette caverne à partir desdits calculs et mesures;

— la surveillance du gradient du potentiel de pression hydraulique Ø in situ pendant la montée en pression dans la caverne au moyen de capteurs de pression, placés autour de la caverne, pour contrôler que le gradient ne s'inverse pas.

On place avantageusement les capteurs de pression sur au moins une ligne d'écoulement probable à raison d'au moins deux capteurs selon chaque ligne d'écoulement probable, l'un des deux capteurs étant situé relativement près de la caverne, de un à quelques mètres. Lesdits capteurs peuvent comprendre des piézomètres.

## Revendications

1. Procédé de prévision et de surveillance de l'étanchéïté d'une caverne souterraine servant au stockage de produits fluides sous pression, ladite caverne étant creusée dans un massif saturé d'eau à une profondeur sous la nappe phréatique au moins égale à la somme d'un facteur de forme et de la pression desdits produits fluides exprimée en hauteur d'eau, caractérisé en ce qu'il comprend:

— le calcul du gradient du potentiel de pression hydraulique Ø en tout point du massif autour de la caverne à l'aide d'un modèle de calcul ou sa mesure sur une maquette à échelle réduite de la caverne;

– la détermination d'une vitesse d'augmentation possible de la pression desdits produits fluides au sein de ladite caverne à partir desdits calculs et mesures;

– la mise en pression progressive dans la caverne;

– la surveillance du gradient du potentiel de pression hydraulique Ø dans le massif pendant l'augmentation de la pression desdits produits fluides au sein de ladite caverne au moyen de capteurs de pression placés autour de la caverne pour contrôler que ledit gradient ne s'inverse pas.

2. Procédé selon la revendication 1, caractérisé en ce que lesdits capteurs de pression sont placés autour de la caverne sur au moins une ligne d'écoulement probable à raison de au moins deux capteurs de pression disposés selon chaque ligne d'écoulement probable, l'un des capteurs d'une ligne étant situé relativement près de la caverne, de un à quelques mètres de sa paroi.

3. Procédé selon l'une quelconque des revendications précédentes, caractérisé en ce que lesdits capteurs de pression comprennent des piézomètres.

4. Procédé selon l'une quelconque des revendications précédentes, caractérisé en ce que ledit modèle de calcul est par éléments finis.

## Claims

1. A method of predicting and monitoring the imperviousness of an underground cavern to be used for stocking fluid products under pressure, said cavern being made in a water-impregnated rock formation at a depth under the ground water level at least equal to the sun of a form parameter and the pressure of said products measured in water heigth, characterised in that it comprises:

– calculating the gradient of the hydraulic pressure potential Ø at any point in the rock formation around the cavern using a calculation model or by measuring said potential on a reduced scale model of the cavern:

– determining a possible rate of pressure rise of said fluid products in said cavern from said calculations and measurements;

– progressively raising the pressure inside the cavern;

– surveying the potential gradient of hydraulic pressure Ø in the rock formation during said pressure rise of said fluid products inside said cavern by means of pressure sensors placed around the cavern in order to check that said gradient is not inverted.

2. A method according to claim 1, characterised in that pressure sensors are placed around the cavern along at least one probable line of flow, with at least two pressure sensors being disposed along each probable line of flow, and with one of the sensors on a line being situated relatively close to the cavern at a distance of one to a few meters from its wall.

3. A method according to anyone of preceding claims, characterised in that said pressure sensors include piezo-electric transducers.

4. A method according to anyone of the preceding claims, characterised in that said computation model is a finite element model.

## Patentansprüche

1. Verfahren zur Vorherbestimmung und zur Überwachung der Dichtheit einer unterirdischen Kaverne zur Lagerung unter Druck stehender flüssiger Produkte, wobei diese Kaverne in einem mit Wasser gesättigten Massiv in einer Tiefe unter dem Grundwasserspiegel ausgehöhlt ist, die mindestens gleich der Summe eines Formfaktors und des Drucks der flüssigen Produkte ausgedrückt in Wasserhöhe ist, dadurch gekennzeichnet, daß es enthält:

– die Berechnung des Gradienten des Wasserdruckpotentials Ø an jedem Punkt des Massivs um die Kaverne herum mit Hilfe eines Rechnungsmodells oder seiner Messung an einem Modell verkleinerten Maßstab der Kaverne,

– die Bestimmung einer möglichen Erhöhungsgeschwindigkeit des Drucks der flüssigen Produkte innerhalb der Kaverne ausgehend von diesen Berechnungen und Messungen,

– das progressive Unterdrucksetzen in der Kaverne,

– die Überwachung des Gradienten des Wasserdruckpotentials Ø im Massiv während der Erhöhung des Drucks der flüssigen Produkte innerhalb der Kaverne mittels Drucksonden, die um die Kaverne herum angeordnet sind, um zu kontrollieren, daß dieser Gradient sich nicht umkehrt.

2. Verfahren nach Anspruch 1, dadurch gekennzeichnet, daß diese Drucksonden um die Kaverne herum auf mindestens einer wahrscheinlichen Fließlinie im Verhältnis von mindestens zwei Drucksonden entlang jeder möglichen Fließlinie angeordnet sind, wobei eine der Sonden einer Linie relativ nahe bei der Kaverne angeordnet ist, zwischen einem und einigen Metern von ihrer Wand entfernt.

3. Verfahren nach einem beliebigen der vorhergehenden Ansprüche, dadurch gekennzeichnet, daß die Drucksonden Piezometer enthalten.

4. Verfahren nach einem beliebigen der vorhergehenden Ansprüche, dadurch gekennzeichnet, daß das Berechnungsmodell mit endlichen Elementen durchgeführt wird.